# EUROPÄISCHE PATENTSCHRIFT

(11) **EP 1 989 068 B1**
(45) Veröffentlichungstag und Bekanntmachung des Hinweises auf die Patenterteilung: **21.04.2010**
(21) Anmeldenummer: 07722924.3
(22) Anmeldetag: 24.02.2007
(51) Int. Cl.: B60G 3/20, B60G 7/02, B60G 11/28

(54) **EINZELRADAUFHÄNGUNG MIT FAHRWERKSVERSTEIFENDEN GAS- ODER HYDRAULIKFEDERUNGSTEILEN**
INDEPENDENT SUSPENSION WITH CHASSIS-STIFFENING PNEUMATIC OR HYDRAULIC SUSPENSION PARTS
SUSPENSION INDÉPENDANTE COMPRENANT DES ÉLÉMENTS D'AMORTISSEMENT PNEUMATIQUE OU HYDRAULIQUE RENFORÇANT LE CHÂSSIS

(30) Priorität: 01.03.2006 DE 102006009301
(43) Veröffentlichungstag der Anmeldung: 12.11.2008
(73) Patentinhaber: Daimler AG, 70327 Stuttgart (DE)
(72) Erfinder: MAUZ, Uwe, 73730 Esslingen (DE)
(74) Vertreter: JENSEN & SON
(86) Internationale Anmeldenummer: PCT/EP2007/001612
(87) Internationale Veröffentlichungsnummer: WO 2007/101569

(56) Entgegenhaltungen:
- DE-A1- 4 117 017
- DE-A1-102004 003 395
- GB-A- 2 387 155
- JP-A- 5 254 327
- JP-A- 10 250 332
- US-A1- 2004 072 479
- US-B1- 6 398 202

## Beschreibung

Die Erfindung betrifft eine Einzelradaufhängung mit mehreren radführenden Lenkern, wobei ein oberer Lenker ein Quer- oder Schräglenker ist und wobei die von den Gelenkpunkten des oberen Quer- oder Schräglenkers aufgespannte Fläche zumindest bereichsweise eine radfedernde Gas- oder Hydraulikfederung schneidet.

Aus der DE 10 2004 003 395 A1 ist eine Einzelradaufhängung bekannt, die zwei radführende Querlenker und ein radabstützendes Luftfederbein umfasst. Der Schlauchrollbalg des Luftfederbeins wird großteils von dem oben liegenden Querlenker umfasst. Der obere Querlenker und die obere Stützlager des Luftfederbeins sind am Fahrzeugaufbau separat gelagert.

Der vorliegenden Erfindung liegt die Problemstellung zugrunde, eine Einzelradaufhängung mit oberen Quer- oder Schräglenkern zu entwickeln, bei der eine an einem Fahrzeugaufbau, einem Fahrschemel oder Montagerahmen angeordnete Lagerung des oberen Quer- oder Schräglenkers ohne Änderung des Achsbauraumes formsteif sowie montage- und wartungsfreundlich gestaltet wird.

Diese Problemstellung wird mit den Merkmalen des Hauptanspruchs gelöst. Dazu weist die Gas- oder Hydropneumatikfederung einen Balg auf, der zwischen einer formsteifen Kopfplatte und einem Abrollkolben angeordnet ist. Die Kopfplatte ist starr am Fahrzeugaufbau, einem Montagerahmen oder einem Fahrschemel angeordnet. An der Kopfplatte stützen sich die fahrzeugaufbauseitigen Gelenke des oberen Quer- oder Schräglenkers ab.

Mit der Erfindung wird für eine Einzelradaufhängung eine Gas- oder Hydropneumatikfederung so verändert, dass Teile von ihr radführende und radtragende Funktionen übernehmen können. Wird z.B. als Gasfederung ein Gasfederdämpferbein verwendet, so wird dessen Kopfplatte bezüglich ihrer Größe und Bauform so ausgelegt, dass sie Teil der Tragstruktur der oberen Lenkerlagerung wird. Zusätzlich nimmt die Kopfplatte die obere Dämpferlagerung auf, so dass am Fahrzeugaufbau eine zusätzliche Fahrwerksabstützstelle eingespart wird.

Durch die Integration der Gas- oder Hydropneumatikfederung in die Tragstruktur der Fahrwerksaufhängung ergibt sich u.a. sowohl eine Gewichtseinsparung als auch eine Bauraumreduzierung.

Weitere Einzelheiten der Erfindung ergeben sich aus den Unteransprüchen und den nachfolgenden Beschreibungen schematisch dargestellter Ausführungsformen:
- Figur 1:: Nfz-Vorderachse mit Leiterrahmen;
- Figur 2:: wie Figur 1, jedoch ohne Leiterrahmen;
- Figur 3:: Gasfederdämpferbein mit oberem Querlenker;
- Figur 4:: wie Figur 3, jedoch mit demontiertem Gasfederdämpferbein und ohne oberen Querlenker;
- Figur 5:: Längsschnitt durch ein Gasfederdämpferbein;
- Figur 6:: Seitenansicht eines Gasfederdämpferbeins, verkleinert;
- Figur 7:: Gasfederdämpferbein mit einem einen Befestigungsflansch und Lenkergelenkteile tragenden Stütztopf.

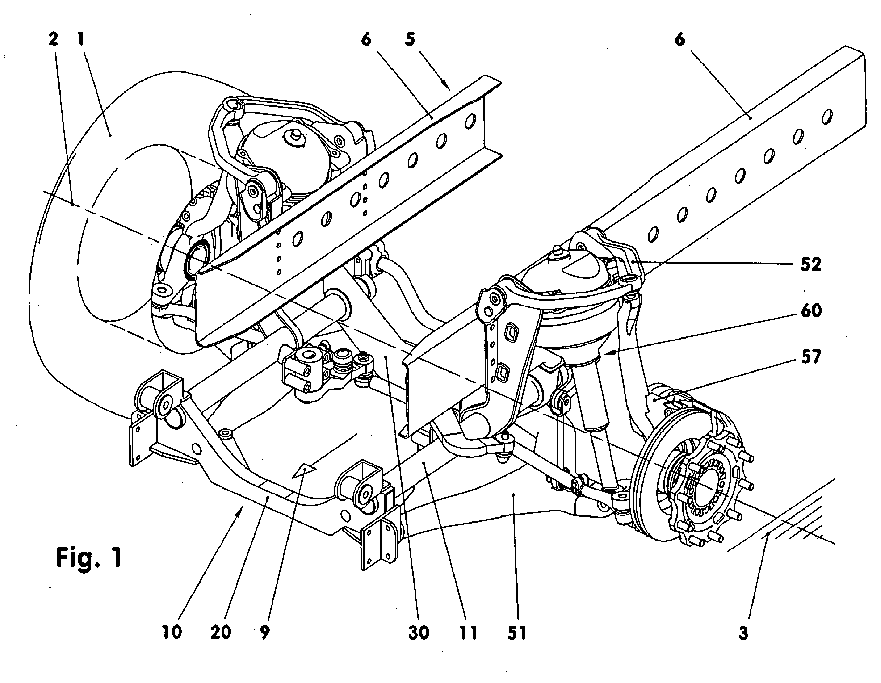

Figur 1 zeigt eine an einem Leiterrahmen befestigte Hochlenkerachse als Vorderachse eines Nutzfahrzeuges mit Einzelradaufhängung. Die Vorderachse ist beispielsweise gelenkt und nicht angetrieben.

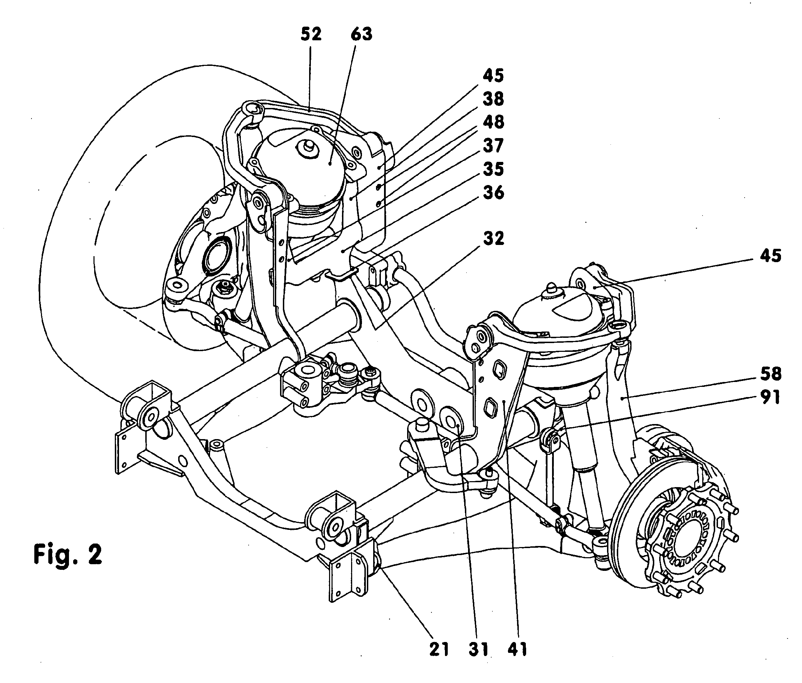

In Figur 2 ist die Vorderachse ohne die Längsholme (6) des Fahrzeugrahmens (5) dargestellt. Die einzelne Einzelradaufhängung umfasst u.a. einen unteren Schräglenker (51), einen oberen Querlenker (52), einen Radträger (57) und ein Gasfederdämpferbein (60). Die Schräglenker (51) und die Querlenker (52) der Vorderachse sind an einem fahrschemelartigen Montagerahmen (10) gelenkig gelagert. Der Montagerahmen (10) selbst ist direkt - also nicht über Elastomergelenke - am Fahrzeugrahmen (5) bzw. an den Längsholmen (6) verschraubt.

Bei dieser Einzelradaufhängung hat der obere Querlenker (52) ein radträgerseitiges Gelenk (53), dessen kürzester Abstand zur Fahrbahnoberfläche - in der Konstruktionslage - zumindest dem Reifendurchmesser des hier gelagerten Rades (1) entspricht.

Der Montagerahmen (10) besteht aus zwei z.B. parallelen Längsträgern (11), zwei Quertraversen (20, 30), zwei gabelartigen Tragelementen (35), zwei vorderen (41) und zwei hinteren Querlenkerträgern (45).

Die rohrförmigen Längsträger (11), die z.B. einen kreisringförmigen Querschnitt haben, sind parallel zu den Längsholmen (6) ausgerichtet und liegen ca. auf dem Höhenniveau der Raddrehachse (2). Beispielsweise tangiert die Raddrehachse (2) in der Konstruktionslage die Längsträger (11) an ihrer Unterseite. Jeder Längsträger (11) liegt unterhalb des nächstgelegenen Längsholmes (6). Die vorderen Enden der Längsträger (11) sind über die vordere (20) und die hinteren Enden über die hintere Quertraverse (30) formsteif verbunden. Die Längsträger (11) sind mit den Quertraversen (20, 30) - in der Draufsicht gesehen - zu einem zumindest annähernd rechteckigen Rahmen verschweißt. Die vordere Traverse (20) liegt dabei vor der Raddrehachse (2), während die hintere (30) hinter ihr (2) liegt.

Die hintere Quertraverse (30) endet beidseits - kurz unterhalb der Längsholme (6) - jeweils in einem Flansch (32). An den Flanschen (32) sind die nach oben ragenden gabelartigen Tragelemente (35) angeschweißt. Das einzelne Tragelement (35) hat einen vorderen (37) und einen hinteren Arm (38). Beide zumindest annähernd parallele Arme (37, 38) haben zueinander einen solchen Abstand, dass ein Gasfederdämpferbein (60) mit seinem Balgbereich mit einem Spiel von mehreren Millimetern oder Zentimetern hineinpasst, vgl. Figur 2.

Der fußseitige Flansch (36) des jeweiligen Tragelements (35) hat zum hinteren Arm (38) einen kürzeren Abstand als zum vorderen (37). Die Differenz beträgt ca. ein Drittel des gesamten Armabstands.

Der jeweils hintere Arm (38) greift formschlüssig in den jeweiligen hinteren Querlenkerträger (45) ein. Die vorderen Arme (37) sind auf die gleiche Art mit den vorderen Querlenkerträgern (41) verbunden. Neben dem Formschluss sind die Arme (37, 38) und die Querlenkerträger (41, 45) miteinander verschweißt. Die vorderen Querlenkerträger (41) sind nach unten verlängert und umgreifen zusätzlich jeweils den hächstgelegenen rohrförmigen Längsträger (11). Das untere, den Längsträger (11) umgreifende Ende des vorderen Querlenkerträgers (41) ist mit dem Längsträger (11) verschweißt.

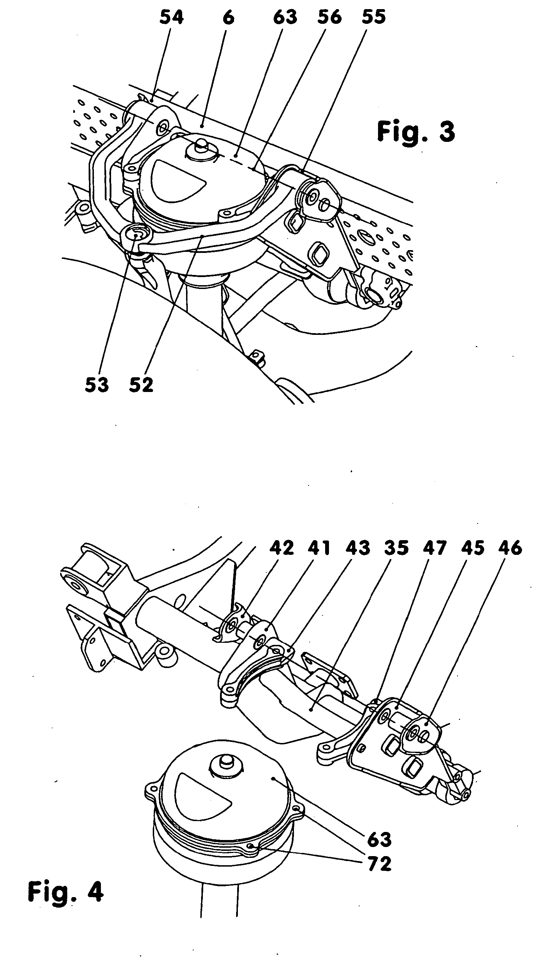

Die vier Querlenkerträger (41, 45) sind an ihren oberen Enden - zur Aufnahme der fahrzeugaufbauseitigen Querlenkergelenke (54, 55) - gabelförmig ausgestaltet, vgl. auch Figur 4. Dazu sind an den Querlenkerträgern (41, 45) zusätzliche Gabellaschen (42, 46) angeschweißt. Die fahrzeugaufbauseitigen Gelenke (54, 55) der Querlenker (52) haben hier beispielsweise eine horizontale Schwenkachse (56), die zudem zumindest annähernd parallel zur Fahrtrichtung (9) orientiert ist. Unterhalb des Gelenkbereiches tragen die pro Radseite paarweise angeordneten Querlenkerträger (54, 55) an den einander zugewandten Flächen Befestigungskonsolen (43, 47) für die Lagerung des Gasfederdämpferbeins (60). Die formsteifen Befestigungskonsolen (43, 47) haben z.B. jeweils zwei Bohrungen und eine zum Gasfederdämpferbein (60) hin orientierte sichelförmige Kontur. Die sichelförmige Kontur soll eine möglichst formschlüssige Anlage am Gasfederdämpferbein (60) ermöglichen.

Nach Figur 2 haben die bereichsweise winkelförmig gestalteten Querlenkerträger (41, 45) mehrere Bohrungen (48), über die der Montagerahmen (10) an den Längsholmen (6) des Leiterrahmens (5) verschraubt ist, vgl. Figur 1.

Die vordere Quertraverse (20) trägt an ihren Enden je drei Befestigungsstellen. Die räumlich am tiefsten gelegenen Befestigungsstellen sind die vorderen Lager (21) der Schräglenker (51). Die im oberen Bereich der Quertraverse (20) angeordneten Befestigungsstellen sind die Gelenke (22) zur Anlenkung von Blattfedern einer alternativ einbaubaren Starrachse. Die seitlich an den Stirnseiten der vorderen Quertraverse (20) liegenden Befestigungsstellen sind winkelförmige Adapter (23) zur Befestigung eines Aufprallstoßabsorbers, der sog. Crashbox.

An der hinteren Quertraverse (30) sind im mittleren Bereich die hinteren Lager (31) der unteren Schräglenker (51) angeordnet. An diesen - unterhalb einer horizontalen Radmittenebene (3) liegenden - Schräglenkern (51) ist fahrwerksseitig der Radträger (57) gelenkig gelagert. Letzterer ist über einen vertikal orientierten Radträgerarm (58) gelenkig mit dem radträgerseitigen Gelenk (53) des oberen Querlenkers (52) gekoppelt.

Zwischen dem unteren Schräglenker (51) und dem oberen Querlenker (52) ist das Gasfederdämpferbein (60) eingebaut. Seine Mittellinie (61) ist - gemessen in einer lotrechten Projektion auf eine fiktive vertikale Fahrzeugquerebene - um 15...20 Winkelgrade geneigt, wobei die beiden oberen fahrzeugaufbauseitigen Anlenkpunkte der Gasfederdämpferbeine (60) einer Achse näher beieinander liegen als die entsprechenden unteren, fahrwerkseitigen Anlenkpunkte. Eine Projektion der Mittellinie (61) auf eine vertikale Fahrzeuglängsebene ist gegen die Vertikale z.B. um 2-4 Winkelgrade geneigt, wobei die unteren Anlenkpunkte in Fahrtrichtung (9) den oberen vorauseilen.

Die Luftfederung (62) bzw. der Gasfederanteil des Gasfederdämpferbeins (60) ist in einem Raum angeordnet, der mit Spiel durch den jeweiligen Längsholm (6), das entsprechende gabelartige Tragelement (35), die Querlenkerträger (41, 45), den Querlenker (52) und den Radträgerarm (57) begrenzt wird.

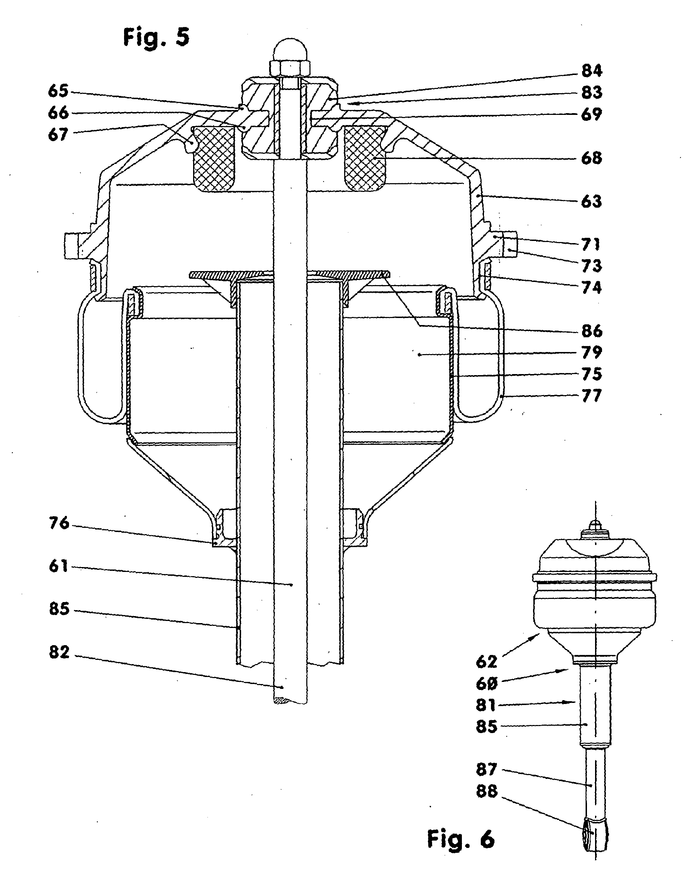

Das Gasfederdämpferbein (60) umfasst einen Stoßdämpfer (81). Von diesem ist in den Figuren 5 und 6 zum einen das Dämpferrohr (85) mit Verlängerung (87) und Gelenkauge (88) und zum anderen die Kolbenstange (82) mit ihrem oberen gelenkigen Stützlager (83) dargestellt. Nach den Figuren 1 und 2 ist das Gelenkauge (88) am Schräglenker (51) in der Nähe des unteren Radträgergelenks gelagert. Das Stützlager (83) lagert in der als Stütztopf (63) gestalteten formsteifen Kopfplatte der Gasfeder (62).

Der einteilige Stütztopf (63) hat eine Topfform, die aus einem Kegelstumpfmantel und einem Zylindermantel zusammengesetzt scheint. Er ist z.B. als Gusseisenteil (GJS 400), als Aluminiumgussteil, als Schmiedeteil oder als Tiefziehblechteil ausgeführt. Im Zylindermantelbereich hat sie eine außen umlaufende versteifende Rippe (71), in der z.B. vier Gewindebohrungen (72) angeordnet sind, vgl. Figur 4. Im Bereich der Bohrungen (72) ist dazu die Rippe (71) verbreitert. Bei einem im Montagerahmen (10) eingebauten Gasfederdämpferbein (60) liegt die Rippe (71) von unten her form- und kraftschlüssig an den Befestigungskonsolen (43, 47) der Querlenkerträger (41, 45) an.

Der Stütztopf (63) hat zur Aufnahme des Stützlagers (83) eine zentrale Bohrung (69) und z.B. zwei Ringstege (65, 66), einer (66) innen und einer (65) außen. An den Ringstegen (65, 66) wird der Elastomerkörper (84) des Stützlagers (83) sicher positioniert. Der Elastomerkörper (84) sitzt verschraubt auf dem Kolbenstangenende zwischen zwei Scheiben eingeklemmt, die durch eine Hülse auf Abstand gehalten werden.

Um das Stützlager (83) herum ist im Verdrängerraum (79) ein ringförmiger Gummipuffer (68) als mechanische Federhubbegrenzung angeordnet. Er wird von einem weiteren - den Stütztopf (63) innen versteifenden - Ringsteg (67) gehalten. An dem Gummipuffer (68) kommt bei einem vollständig eingefederten Rad (1) der am oberen Ende des Dämpferrohres (85) angeordnete Anschlagteller (86) zur Anlage.

Nach Figur 5 ist am Dämpferrohr (85) ein Federteller (76) angeschweißt. Letzterer trägt einen Abrollkolben (75) mit z.B. zylindrischen Balgabrollbereich. Zwischen dem Abrollkolben (75) und dem Stütztopf (63) ist ein Schlauchrollbalg (77) angeordnet. Letzterer wird am Abrollkolben (75) und am Stütztopf (63) jeweils mittels eines Klemmringes gehalten. Im Abrollkolben (75) und im Stütztopf (63) sind dazu entsprechende umlaufende Sicken vorhanden. Die Sicke (74) des Stütztopfes (63) liegt unmittelbar unterhalb der Versteifungsrippe (71).

Innerhalb des Gasfederdämpferbeins (60) dient die Kolbenstange (82) des Stoßdämpfers (81) als Geradführung für die Gasfederung (62).

Bei der Ausführungsvariante nach den Figuren 1 - 6 erfüllt der Stütztopf (63) vier voneinander unabhängige Funktionen. Die erste Funktion ist eine Aussteifung der Lagerung des oberen Querlenkers (52). Der Stütztopf (63) bildet zusammen mit den Querlenkerträgern (41, 45), dem Längsträger (11) und dem Tragelement (35) eine besonders formsteife Baugruppe, deren Verwindungssteifigkeit durch die Verschraubung mit dem Leiterrahmen (5) zusätzlich erhöht wird. Ferner nimmt der Stütztopf (63) das Stützlager (83) des Stoßdämpfers (81) auf, so dass dessen separate Anlenkung am Fahrzeugaufbau (5) entfällt.

Des Weiteren lassen sich beim Einbau des Gasfederdämpferbeins (60) in den Montagehilfsrahmen (10) über die Verschraubung des Stütztopfs (63) an den Querlenkerträgern (41, 45) bzw. über deren Befestigungskonsolen (43, 47) das Gelenkspiel der Gelenke (54, 55) einstellen. Der Grund des bisherigen Einstellerfordernisses ist bedingt durch das Einpressen der Elastomergelenke (54, 55) in die Gelenkaugen des oberen Querlenkers (52). Die Einpresslage der Elastomergelenke (54, 55) ist z.B. mit 0,75 Millimeter Toleranz ausgestattet. Im ungünstigsten Fall kann der Lagerabstand um 1,5 Millimeter variieren. Um ein Klemmen der Lenkerschwenkbewegung zu vermeiden, sind die rahmenseitigen Lager bisher einstellbar. Hier jedoch wird der Querlenker (52) mit seinen Elastomergelenken (54, 55) an den Querlenkerträgern (41, 45) eingesetzt und anschließend wird der Abstand zwischen den Querlenkerträgern (41, 45) - einer Radseite - so variiert, dass der Querlenker (52) mit minimalem Spiel klemmfrei bewegbar ist. In dieser Position wird der Stütztopf (63) mit den Querlenkerträgern verschraubt. Bei einem späteren Montieren des Montagerahmens (10) am Leiterrahmen (5) wird durch die Verschraubung der Querlenkerträger (41, 45) mit den Längsholmen (6) die Lenkerspieleinstellung nochmals gesichert, so dass im Wartungsfall das Gasfederdämpferbein (60) ausgetauscht werden kann, ohne dabei das Lenkerspiel zu verstellen.

Nicht zuletzt wird durch die Auswölbung des Stütztopfs (63) der Verdrängerraum (79) erheblich vergrößert, was zur Anpassung der Gasfederrate benutzt wird.

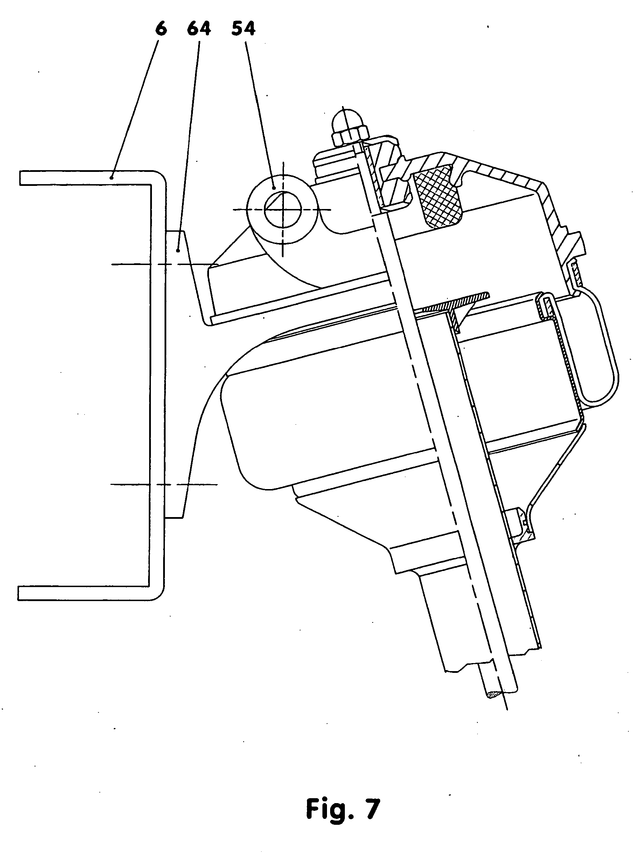

Die Figur 7 zeigt ein Gasfederdämpferbein (60), das direkt am Längsholm (6) des Leiterrahmens (5) verschraubt ist. Dazu ist am Stütztopf (63) ein Abstützflansch (64) angeformt oder befestigt. Der Abstützflansch liegt unmittelbar am Längsholm (6) an. Am Stütztopf (63) sind zusätzlich die Aufnahmen für die fahrzeugaufbauseitigen Gelenke (54, 55) des oberen Querlenkers (52) angeordnet. Diese Lösung ist denkbar, wenn die Einzelradaufhängung ohne Montagerahmen am Fahrzeugaufbau angeordnet wird.

Um die Montage- und Wartungsfreundlichkeit der Einzelradaufhängung bezüglich des Gasfederdämpferbeins (60) zu demonstrieren, wird beispielsweise die Demontage des fahrerseitigen Gasfederdämpferbeins (60) beschrieben. Zunächst wird der fahrerseitige Längsholm (6) soweit aufgebockt, dass sich das fahrerseitige Rad (1) demontieren lässt. Nun wird das Gasfederdämpferbein (60) von der Druckluftversorgung getrennt und entlüftet. Nach Ausbau des Rades (1) wird das schräglenkerseitige Gelenk des Gasfederdämpferbeins (60) am Schräglenker (51) gelöst. Bei einer nach vorn geschwenkten Fahrerkabine werden anschließend die vier in den Befestigungskonsolen (43, 47) der Querlenkerträger (41, 45) sitzenden Schrauben von oben her gelöst und entfernt. Nun wird das druckfreie Gasfederdämpferbein (60) nach oben zusammen geschoben. Abschließend wird das Gelenkauge (88) in Fahrtrichtung (9) nach vorn über die äußere Spurstange (98) gehoben und dann nach vorn unten herausgenommen.

Das neue Gasfederdämpferbein wird in umgekehrter Reihenfolge montiert.

### Bezugszeichenliste

- 1: Rad
- 2: Raddrehachsen, Mittellinie
- 3: Horizontalebene durch (2)
- 5: Fahrzeugrahmen, Fahrzeugaufbau
- 6: Längsholme des Leiterrahmens
- 9: Fahrtrichtung

- 10: Montagerahmen
- 11: Längsträger, rohrförmig, rechts, links
- 20: Quertraverse, vorn
- 21: Schräglenkerlager, vorn
- 30: Quertraverse, hinten
- 31: Schräglenkerlager, hinten
- 32: Traversenflansch
- 35: Tragelement, gabelartig
- 36: Flansch, fußseitig
- 37: Arm, vorn
- 38: Arm, hinten

- 41: Querlenkerträger, vorn
- 42: Gabellaschen
- 43: Befestigungskonsolen
- 45: Querlenkerträger, hinten
- 46: Gabellaschen
- 47: Befestigungskonsolen
- 48: Bohrungen in (47)

- 51: Schräglenker, unten
- 52: Querlenker, oben
- 53: Gelenk, fahrwerkseitig, radträgerseitig
- 54, 55: Gelenke, fahrzeugaufbauseitig
- 56: Schwenkachse
- 57: Radträger
- 58: Radträgerarm

- 60: Gasfederdämpferbein
- 61: Mittellinie
- 62: Gasfeder, Luftfederung
- 63: Stütztopf, Federbeintopf, Kopfplatte
- 64: Abstützflansch
- 65: Ringsteg, außen
- 66: Ringsteg, innen
- 67: Ringsteg, innen, für (68)
- 68: Gummipuffer
- 69: Bohrung, zentral

- 71: Versteifungsrippe
- 72: Gewindebohrungen
- 73: Verbreiterungen
- 74: Sicke, umlaufend
- 75: Abrollkolben
- 76: Federteller
- 77: Balg, Schlauchrollbalg
- 79: Verdrängerraum

- 81: Stoßdämpfer
- 82: Kolbenstange
- 83: Stützlager, Kolbenstangengelenk, elastisch
- 84: Elastomerkörper
- 85: Dämpferrohr, Dämpferzylinder
- 86: Anschlagteller
- 87: Verlängerung
- 88: Gelenkauge

## Patentansprüche

1. Einzelradaufhängung mit mehreren radführenden Lenkern, wobei ein oberer Lenker (52) ein Quer- oder Schräglenker ist und wobei die von den Gelenkpunkten (53-55) des oberen Quer- oder Schräglenkers (52) aufgespannte Fläche zumindest bereichsweise eine radfedernde Gas- oder Hydropneumatikfederung (62) schneidet,
**dadurch gekennzeichnet,**
- **dass** die Gas- oder Hydropneumatikfederung (62) einen Balg (77) aufweist, der zwischen einer formsteifen Kopfplatte (63) und einem Abrollkolben (75) angeordnet ist,
- **dass** die Kopfplatte (63) starr am Fahrzeugaufbau (5), einem Montagerahmen (10) oder einem Fahrschemel angeordnet ist,
- **dass** sich an der Kopfplatte (63) die fahrzeugaufbauseitigen Gelenke (54, 55) des oberen Quer- oder Schräglenkers (52) abstützen.

2. Einzelradaufhängung nach Anspruch 1,
**dadurch gekennzeichnet, dass**
die Kopfplatte (63) ein glocken- oder halbkugelförmig gewölbter Stütztopf ist.

3. Einzelradaufhängung nach Anspruch 2,
**dadurch gekennzeichnet, dass**
der Stütztopf (63) im Bereich seines größten Durchmessers eine umlaufende Versteifungsrippe (71) aufweist.

4. Einzelradaufhängung nach Anspruch 2,
**dadurch gekennzeichnet, dass**
der Innenraum des Stütztopfes (63) ein Teil des Gasfedervolumens umschließt.

5. Einzelradaufhängung nach Anspruch 1 oder 2,
**dadurch gekennzeichnet, dass**
sich an der Kopfplatte (63) oder am Stütztopf das fahrzeugaufbauseitige Gelenk (83) des Stoßdämpfers (81) abstützt.

6. Einzelradaufhängung nach Anspruch 5,
**dadurch gekennzeichnet, dass**
sich der Abrollkolben (75) auf einem Dämpferrohr (85) abstützt.

7. Einzelradaufhängung nach Anspruch 5,
**dadurch gekennzeichnet, dass**
sich der Stoßdämpfer (81) auf einem unteren Quer- oder Schräglenker (51) abstützt.

8. Einzelradaufhängung nach Anspruch 1,
**dadurch gekennzeichnet, dass**
der Balg (77) ein Schlauchrollbalg ist.

## Claims

1. Independent wheel suspension having a plurality of wheel-guiding control arms, wherein an upper control arm (52) is a transverse control arm or semi-trailing arm, and the plane defined by the hinge points (53-55) of the upper transverse control arm or semi-trailing arm (52) at least partially intersects a wheel-suspending pneumatic or hydraulic suspension (62),
**characterised in that**
- the pneumatic or hydropneumatic suspension (62) has a bellows (77) arranged between a dimensionally stable top plate (63) and a roll-off piston (75),
- the top plate (63) is rigidly mounted on the vehicle body (5), a mounting frame or a chassis sub-frame,
- the joints (54, 55) of the upper transverse control arm or semi-trailing arm (52) on the vehicle body side are supported on the top plate (63).

2. Independent wheel suspension according to claim 1,
**characterised in that**
the top plate (63) is a support pot curved in a bell-shaped or hemispherical manner.

3. Independent wheel suspension according to claim 2,
**characterised in that**
the support pot (63) has a circumferential stiffening rib (71) in the region of its largest diameter.

4. Independent wheel suspension according to claim 2,
**characterised in that**
the interior space of the support pot (63) encloses a part of the gas spring volume.

5. Independent wheel suspension according to claim 1 or 2,
**characterised in that**
the joint (83) of the shock absorber (81) on the vehicle body side is supported on the top plate (63) or on the support pot.

6. Independent wheel suspension according to claim 5,
**characterised in that**
the roll-off piston (75) is supported on a damper tube (85).

7. Independent wheel suspension according to claim 5,
**characterised in that**
the shock absorber (81) is supported on a lower transverse control arm or semi-trailing arm (51),

8. Independent wheel suspension according to claim 1,
**characterised in that**
the bellows (77) is a tubing bellows.

## Revendications

1. Suspension indépendante comprenant plusieurs bras guidant les roues, un bras supérieur (52) se présentant sous la forme d'un bras transversal ou oblique et la surface définie par les points d'articulation (53, 55) du bras transversal ou oblique supérieur (52) coupant au moins partiellement un système d'amortissement pneumatique ou hydraulique (62) sur lequel les roues sont suspendues, **caractérisée en ce que**
- le système d'amortissement pneumatique ou hydraulique (62) présente un soufflet (77) disposé entre une plaque supérieure (63) indéformable et un piston dérouleur (75),
- la plaque supérieure (63) est disposée de façon rigide sur la carrosserie (5) du véhicule, sur un châssis de montage (10) ou encore sur un faux-châssis,
- les joints articulés (54, 55) disposés côté carrosserie du véhicule du bras transversal ou oblique supérieur s'appuient sur la plaque supérieure (63).

2. Suspension indépendante selon la revendication 1, **caractérisée en ce que** la plaque supérieure (63) est un creuset d'appui cintré en forme de cloche ou hémisphérique.

3. Suspension indépendante selon la revendication 2, **caractérisée en ce que** le creuset d'appui (63) présente dans la région de son diamètre le plus grand une nervure raidisseuse périphérique (71).

4. Suspension indépendante selon la revendication 2, **caractérisée en ce que** l'intérieur du creuset d'appui (63) renferme une partie du volume du ressort pneumatique.

5. Suspension indépendante selon la revendication 1 ou 2, **caractérisée en ce que** le joint articulé (83) situé côté carrosserie du véhicule de l'amortisseur (81) s'appuie sur la plaque supérieure (63) ou sur le creuset d'appui.

6. Suspension indépendante selon la revendication 5, **caractérisée en ce que** le piston dérouleur (75) s'appuie sur un tube (85)d'amortisseur.

7. Suspension indépendante selon la revendication 5, **caractérisée en ce que** l'amortisseur (81) s'appuie sur un bras transversal ou oblique inférieur (51).

8. Suspension indépendante selon la revendication 1, **caractérisée en ce que** le soufflet (77) est un soufflet en tuyau flexible.
